# EUROPEAN PATENT SPECIFICATION

(11) **EP 1 485 663 B1**
(45) Date of publication and mention of the grant of the patent: **27.08.2008**
(21) Application number: 02701513.0
(22) Date of filing: 26.02.2002
(51) Int. Cl.: F26B 11/00, F26B 11/02, D06F 58/02

(54) **CLOTHES DRYER**
WÄSCHETROCKNER
SECHE-LINGE

(43) Date of publication of application: 15.12.2004
(73) Proprietor: Wittenberg, Emanuel G., Hendon London NW4 1AH (GB); Wittenberg, Raphael I., Hendon London NW4 1AH (GB)
(72) Inventor: Mizrahi, Benny, Givat-Avni, Lower-Galile 15227 (IL)
(74) Representative: Bucher, Ralf Christian
(86) International application number: PCT/IL2002/000145
(87) International publication number: WO 2002/090853

(56) References cited:
- JP-A- 57 142 299
- JP-A- 60 191 000
- US-A- 2 707 338
- US-A- 3 360 871
- US-B1- 6 212 792
- US-B2- 6 425 192
- PATENT ABSTRACTS OF JAPAN vol. 1997, no. 05, 30 May 1997 (1997-05-30) -& JP 09 000791 A (MATSUSHITA ELECTRIC IND CO LTD), 7 January 1997 (1997-01-07)

## Description

### BACKGROUND AND SUMMARY OF THE INVENTION

The present invention relates to a clothes dryer, particularly of the domestic type. In conventional clothes driers, the air flow is mainly horizontal and heated by electrical elements or gas in some models which makes it one of the most expensive appliances to operate. The longer it runs, the more money it costs. The vast majority of electricity or gas costs for clothes driers is caused by heating air.

It is likely that in the near future a regulation will come into force for appliances manufactures to minimize the usage of these products. Another critical issue is the air pollution made by power supply stations, since by increasing the electrical power the air pollution is increased.

US 2,707,338 discloses a clothes dryer, especially a clothes dryer that utilizes normal household air forced through the clothes by a blower and has for one object to provide means to direct the air to the best advantage for drying the clothes without the addition of any heating means.

One object of this invention is therefore to provide an improved clothes dryer which uses minimal energy for drying clothes. Another object of this invention is to provide a clothes dryer which is very simple to build, very easy to fix and very cheap to operate. Yet another object of this invention is to avoid lint to be created from clothes and to maintain the quality of clothes, so that there is no need to clean the filter after every usage. A still further object is to provide a very safe product to operate with no danger of fire by using the environment temperature.

These Objects are achieved by a clothes dryer with the features of the independent claim. Further embodiments of the clothes dryer are subject of the dependent claims.

The present invention provides an unique clothes dryer which does not require any heat source (a gas or heating element). The process used by this dryer is based on the fact that wind is used to dry clothes.

### BRIEF DESCRIPTION OF THE DRAWINGS

- Fig. 1: is a perspective schematic view of a clothes dryer and an air flow circuit according to the present invention;
- Fig. 2: is a see-through view of the front part of the clothes dryer shown in Fig. 1;
- Fig. 3: is a see-through view of the back part of the clothes dryer shown in Fig. 1; and
- Fig. 4: is a view of the removable ventilation unit according to the present invention.

### DISCLOSURE OF THE INVENTION

The clothes dryer according to the present invention does not require a heating element or burner as used in some models.

The dryer system would contain a front loading door 1 through which the clothes would be loaded. This door or opening can consist of a hinged door or a screw-on or bayonet type lid.

There is a door switch inside the main cabinet of the dryer. When the dryer door is closed it contacts the switch which activates the dryer system.

According to the present invention, the preferred dryer basket would be horizontal with an horizontal axis 14 in the basket support frame 13, and rotating in a ball bearing 18. The rotating basket or a part of it that holds the clothes will be build with a specific construction as matrix or net 10, with a pole in a circular shape 9 to reduce the resistance to the airflow through the basket. It may have a different configuration such as a square 10, a rectangle, rings or another shape.

The basket is much bigger than the basket of conventional driers. This is achieved by completely removing the heating system and the exhaust fan what improves the effectiveness of the drying process.

The preferred material of construction for the dryer basket is stainless steel. However, other compatible materials can serve the function.

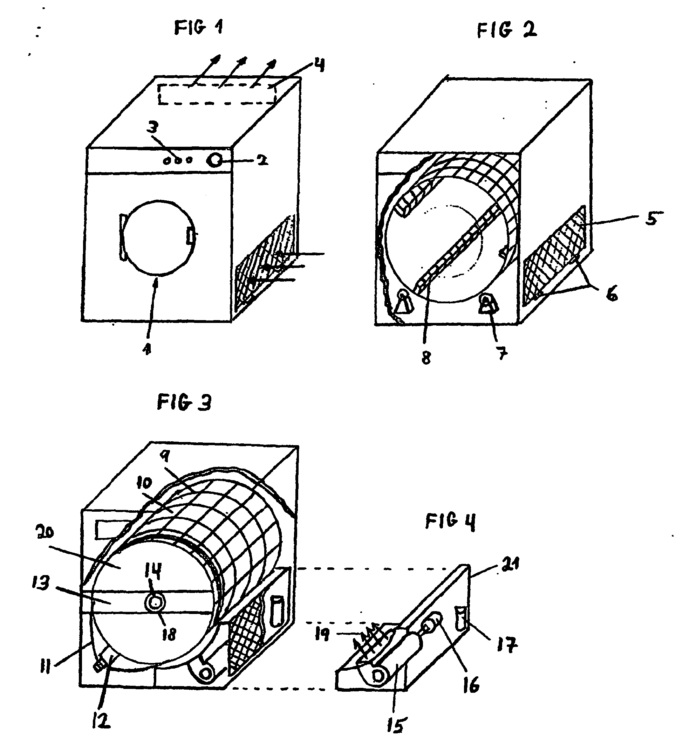

The basket, which is operated by a motor 12, can rotate in both directions using a drive belt 11, while the basket that holds the clothes is rotated. A ventilation unit (Fig. 4) provides a direct, high velocity airflow 19 that flows through the clothes as they tumble and which dries the clothes and water in them. Of course, in order to shorten the drying time, an heating element may be included in the ventilation unit.

The ventilation unit is placed at the bottom-side of the basket, yet it may be placed in both sides of the dryer

The system capitalizes the space between the basket and the dryer cabinet. It is build as one part (Fig. 4), like a removable drawer for easy handling. The feeding air comes from outside of the clothes dryer and passes through a filtering system 5 that removes dust for perfect air purifying. The filtering system is like a horizontal door with a hinge 6 that can be opened for cleaning the filter from dust.

This system also contains a removable container 17 for refilling evaporate material such as perfume that is carried with the airflow and passed through the clothes and refreshes them. Yet the ventilation unit can be build as a static unit or part of the main cabinet.

The operating system contains a timer 2 which may be a mechanical device like a simple clock or it may be completely electronic which is just a digital readout. Selector switch: this dryer has one more switch on its control panel 3 that allows to adjust the airflow speed (as an option).

## Claims

1. Clothes dryer, particularly of the domestic type, which uses a process for drying clothes that does not require any heat source, containing
a basket (20) which can be rotated, and
a ventilation unit (15, 16) for feeding a direct, high velocity airflow (19) to the basket (20)for drying the clothes,
**characterized in that**
the basket is constructed as matrix or net with pole in a circular shape (9, 10) to reduce resistance in air flow through the basket.

2. Clothes dryer according to claim 1, wherein the ventilation unit (15, 16) is removable from the dryer and built like a closed drawer.

3. Clothes dryer according to claim 1, wherein the ventilation unit (15, 16) is a part of the main cabinet of the dryer.

4. Clothes dryer according to claim 1, 2 or 3, wherein the ventilation unit comprises a wide centrifugal fan (15, 16) in order to provide a well balanced airflow (19).

5. Clothes dryer according to any of the preceding claims, wherein the ventilation unit (15, 16) comprises a container (17) for evaporating material such as perfume which is carried with the airflow (19) in order to refresh clothes in the basket (20).

6. Clothes dryer according to any of the preceding claims, comprising a filtration unit (5) for removing dust from the airflow (19).

7. Clothes dryer according to claim 6, wherein the filtration unit (5) is built like a horizontal door with a hinge (6), which can be easily opened for cleaning the filtration unit (5).

8. Clothes dryer according to any of the preceding claims, comprising a window (4) for passing air out of the dryer.

9. Clothes dryer according to any of the preceding claims, comprising a switch on a control panel (3) that allows to adjust the speed of the airflow (19).

## Patentansprüche

1. Wäschetrockner, insbesondere vom Haustyp, der ein Verfahren zum Trocknen von Wäsche benutzt, das keine Wärmequelle erfordert, umfassend
einen Korb (20), der gedreht werden kann, und
eine Lüftungseinheit (15, 16) zum Zuführen einer direkten Hochgeschwindigkeits-Luftströmung (19) zum Korb (20) zum Trocknen der Wäsche,
**dadurch gekennzeichnet, dass**
der Korb als Matrix oder Netz mit einem Stab in einer kreisförmigen Gestalt (9, 10) konstruiert ist, um den Widerstand im Luftstrom durch den Korb zu verringern.

2. Wäschetrockner gemäß Anspruch 1, wobei die Lüftungseinheit (15,16) vom Trockner entfernbar und wie eine geschlossene Schublade gebaut ist.

3. Wäschetrockner gemäß Anspruch 1, wobei die Lüftungseinheit (15, 16) ein Teil des Hauptgehäuses des Trockners ist.

4. Wäschetrockner gemäß Anspruch 1, 2 oder 3, wobei die Lüftungseinheit einen breiten Fliehkraftlüfter (15, 16) aufweist, um eine gut balancierten Luftströmung (19) vorzusehen.

5. Wäschetrockner gemäß einem der vorhergehenden Ansprüche, wobei die Lüftungseinheit (15, 16) einen Behälter (17) für Verdunstungsstoffe wie Parfüm aufweist, die mit der Luftströmung (19) transportiert werden, um Wäsche im Korb (20) aufzufrischen.

6. Wäschetrockner gemäß einem der vorhergehenden Ansprüche, umfassend eine Filtrierungseinheit (5) zum Entfernen von Schmutz aus der Luftströmung (19).

7. Wäschetrockner gemäß Anspruch 6, wobei die Filtrierungseinheit (5) wie eine horizontale Tür mit einem Scharnier (6) gebaut ist, die zum Reinigen der Filtrierungseinheit (5) einfach geöffnet werden kann.

8. Wäschetrockner gemäß einem der vorhergehenden Ansprüche, umfassend ein Fenster (4) zum Auslassen von Luft aus dem Trockner.

9. Wäschetrockner gemäß einem der vorhergehenden Ansprüche, umfassend einen Schalter auf einer Schalttafel (3), der es ermöglicht, die Geschwindigkeit der Luftströmung (19) einzustellen.

## Revendications

1. Sèche-linge, particulièrement de type domestique, qui utilise un procédé pour sécher des vêtements qui ne nécessite pas de source thermique, contenant
un panier (20) qui peut être tourné, et
une unité de ventilation (15, 16) pour alimenter un flux d'air (19) direct à grande vitesse vers le panier (20) pour sécher les vêtements,
**caractérisé en ce que**
le panier est construit comme une matrice ou un filet avec un pôle d'une forme circulaire (9, 10) pour réduire la résistance au flux d'air à travers le panier.

2. Sèche-linge selon la revendication 1, dans lequel l'unité de ventilation (15, 16) est amovible du sèche-linge et construite comme un tiroir fermé.

3. Sèche-linge selon la revendication 1, dans lequel l'unité de ventilation (15, 16) est une partie de l'armoire principale du sèche-linge.

4. Sèche-linge selon la revendication 1, 2 ou 3, dans lequel l'unité de ventilation comprend un ventilateur centrifuge large (15, 16) pour fournir un flux d'air bien équilibré (19).

5. Sèche-linge selon l'une quelconque des revendications précédentes, dans lequel l'unité de ventilation (15, 16) comprend un conteneur (17) pour l'évaporation d'une matière comme du parfum qui est portée par le flux d'air (19) pour rafraîchir les vêtements dans le panier (20).

6. Sèche-linge selon l'une quelconque des revendications précédentes, comprenant une unité de filtrage (5) pour enlever la poussière du flux d'air (19).

7. Sèche-linge selon la revendication 6, dans lequel l'unité de filtrage (5) est construite comme une porte horizontale avec un gond (6), qui peut être facilement ouverte pour nettoyer l'unité de filtrage (5).

8. Sèche-linge selon l'une quelconque des revendications précédentes, comprenant une fenêtre (4) pour faire sortir l'air du sèche-linge.

9. Sèche-linge selon l'une quelconque des revendications précédentes, comprenant un commutateur sur un panneau de commande (3) qui permet d'ajuster la vitesse du flux d'air (19).
